# EUROPÄISCHE PATENTSCHRIFT

(11) **EP 4 705 161 B1**
(45) Veröffentlichungstag und Bekanntmachung des Hinweises auf die Patenterteilung: **21.10.2026**
(21) Anmeldenummer: 24721939.7
(22) Anmeldetag: 23.04.2024
(51) Int. Cl.: B60T 8/1761, B60T 8/1766, B60T 8/18

(54) **VERFAHREN ZUM BETREIBEN EINES ANTIBLOCKIERSYSTEMS EINES FAHRZEUGS, COMPUTERPROGRAMM UND/ODER COMPUTERLESBARES MEDIUM, STEUERGERÄT UND FAHRZEUG**
METHOD FOR OPERATING AN ANTI-LOCK BRAKING SYSTEM OF A VEHICLE, COMPUTER PROGRAM AND/OR COMPUTER-READABLE MEDIUM, CONTROLLER, AND VEHICLE
PROCÉDÉ DE FONCTIONNEMENT D'UN SYSTÈME DE FREINAGE ANTIBLOCAGE D'UN VÉHICULE, PROGRAMME INFORMATIQUE ET/OU SUPPORT LISIBLE PAR ORDINATEUR, DISPOSITIF DE COMMANDE, ET VÉHICULE

(30) Priorität: 03.05.2023 DE 102023111424
(43) Veröffentlichungstag der Anmeldung: 11.03.2026
(73) Patentinhaber: ZF CV Systems Global GmbH, 3006 Bern (CH)
(72) Erfinder: SZYMANSKI, Robin, 30419 Hannover (DE); MARX, Andreas, 30926 Seelze (DE); BINDER, Hartmut, 30657 Hannover (DE)
(74) Vertreter: Rabe, Dirk-Heinrich
(86) Internationale Anmeldenummer: PCT/EP2024/061016
(87) Internationale Veröffentlichungsnummer: WO 2024/227657

(56) Entgegenhaltungen:
- DE-A1- 102009 019 960
- DE-A1- 19 501 286
- DE-A1- 19 707 210

## Beschreibung

Die Erfindung betrifft ein Verfahren zum auf eine Achse eines Fahrzeugs, insbesondere Nutzfahrzeugs, bezogenes Betreiben einer Betriebsbremse zum Bremsen eines Rades der Achse. Die Erfindung betrifft auch ein Computerprogramm und/oder computerlesbares Medium, ein Steuergerät für ein Fahrzeug, insbesondere Nutzfahrzeug, und ein Fahrzeug, insbesondere Nutzfahrzeug.

Aus dem Stand der Technik sind Bremssysteme für Fahrzeuge bekannt. Derartige Bremssystem können ein sogenanntes Antiblockiersystem (ABS) aufweisen. Das Bremssystem ist dazu eingerichtet, ein Bremsmoment auf ein Rad oder mehrere Räder des Fahrzeugs auszuüben, um das Fahrzeug zu verzögern. Das ABS vermindert oder verhindert dabei das Blockieren eines durch das Bremssystem gebremsten Rades durch ein Vermindern eines Bremsdrucks und kann so einen Bremsvorgang sowie die Fahrsicherheit verbessern.

Dabei sind ABS bekannt, die die Raddrehzahl des zu bremsenden Rades erfassen und bei einer zu abrupten Drehzahländerung des Rades eine Verminderung des Bremsdrucks veranlassen, um ein Blockieren des Rades zu vermeiden oder zu beenden.

Ferner sind zentral gesteuerte Bremssysteme bekannt, die eine Bremskraftverteilung und/oder eine Fahrdynamikregelung, beispielsweise unter Heranziehung von Eingangssignalen von einem Längsbeschleunigungssensor, ermöglichen.

Die DE19501286A1 offenbart eine Vorrichtung und ein Verfahren zur Steuerung bzw.

Regelung der Bremsanlage eines Fahrzeugs, wobei ein elektronisches Steuergerät vorgesehen ist, welches die Bremsanlage durch Beeinflussung wenigstens einer Betriebsgröße der Bremsanlage bzw. des Fahrzeugs, vorzugsweise der Bremsdruck, abhängig vom Fahrerwunsch steuert bzw. regelt, wobei die Belastung des Fahrzeugs an wenigstens einer Fahrzeugachse ermittelt wird, und die jeweilige Belastung bzw. Belastungsänderung bei der Steuerung bzw. Regelung der Bremsanlage durch die elektronische Steuereinheit berücksichtigt wird, so dass beim Bremsvorgang die wenigstens eine Betriebsgröße für wenigstens eine Achse auf der Basis der erfassten aktuellen Belastung an einer anderen Achse und der statischen Belastung im ungebremsten Zustand vorzeichenrichtig an die dynamische Lastverlagerung angepasst wird.

Die DE19707210A1 betrifft eine Vorrichtung und ein Verfahren zur achslastabhängigen Bremskraftverteilung in einer Bremsanlage eines Fahrzeuges.

Die DE102009019960A1 beschreibt ein Verfahren zum Regeln eines Antiblockier-Bremssystems an einem Fahrzeug, wobei die Methode Berechnen einer Vorhersage von Reifennormalkräften und Modifizieren eines auf eine Bremse aufgebrachten Bremsmoments basierend auf den vorhergesagten Reifennormalkräften aufweist. Die Vorhersage von Reifennormalkräften kann berechnet werden, indem vorhergesagte Longitudinalkräfte oder Abschätzungen von Longitudinalkräften benutzt werden, welche durch Vorhersagen eines Hauptzylinder-Drucks erhalten werden.

DE 10 2018 123 996 A1 offenbart eine als Baueinheit ausgeführtes wenigstens zweikanaliges elektro-pneumatisches zentrales Druckregelmodul für eine elektro-pneumatische Betriebsbremseinrichtung eines Fahrzeugs, mit wenigstens zwei in Bezug auf einen Bremsdruck elektrisch regelbaren Druckregelkanälen. Dabei ist vorgesehen, dass ein zentrales elektronisches Bremssteuergerät eine elektrische und elektronische Bauteile tragende Platine aufweist, wobei in den elektrischen und elektronischen Bauteilen Routinen wenigstens für die Bremsdruckregelung und für die Fahrdynamikregelung implementiert sind, wobei auf oder an der wenigstens einen Platine wenigstens ein Inertialsensor angeordnet und mit wenigstens einigen der elektrischen und elektronischen Bauteilen auf der Platine derart elektrisch leitend verbunden ist, dass die Ausgangssignale des wenigstens einen Inertialsensors in die wenigstens einigen elektrischen und elektronischen Bauteile zur Durchführung der Fahrdynamikregelung einsteuerbar sind. Optional können zwischen dem zentralen Druckregelmodul als "Zentralmodul" und Bremszylindern an Rädern einer ersten Achse und einer zweiten Achse auch ABS-Drucksteuerventile geschaltet sein, welche eine radindividuelle Steuerung/Regelung des Bremsdrucks in diesen Bremszylindern erlauben.

Dabei werden die ABS-Drucksteuerventile durch das zentrale elektronische Bremssteuergerät gesteuert. Ein Antiblockiersystem eines Rades einer Achse gemäß dem Stand der Technik kontrolliert beziehungsweise regelt und/oder steuert das Bremsen des Rades auf der Grundlage von Informationen, die das Rad und/oder die Achse selbst betreffen, möglicherweise beeinflusst durch ein Eingangssignal des Zentralsteuergeräts.

Eine derartige Regelung eines ABS kann jedoch zu einer wiederholten Achslastverschiebung und einer entsprechenden Bewegung einer Fahrerkabine des Fahrzeugs führen, insbesondere bei bestimmten Reibungseigenschaften der Fahrbahn beziehungsweise des Untergrunds und besonderen Fahrzeugkonfigurationen.

Dabei kann das ABS durch eine wiederholte Achslastverschiebung eine Schwingungsmode des Fahrzeugs anregen. Die Schwingungsmode kann dabei zu einer wiederholten, beispielsweise periodischen, Verlagerung der Achslast führen. Dies kann für einen Fahrer und/oder Insassen des Fahrzeugs unangenehm sein. Zudem ändert sich eine zwischen den Rädern und dem Untergrund wirkende Normalkraft wiederholt.

Eine Achslastverlagerung während einer Bremsung mit einem ABS kann aufgrund von beispielsweise periodisch steigender und fallender Normalkraft auf die Räder des Fahrzeugs beziehungsweise Achsen des Fahrzeugs zu einem tiefen Radabsturz führen, also zu einem vergleichsweise abrupt auftretenden und betragsmäßig hohen Schlupf an einem oder mehreren Rädern.

Wenn die Achslastverlagerung vergleichsweise groß ist, kann es dazu kommen, dass Druckregel- und/oder Drucksteuervorrichtungen zu langsam sind, um einen Bremsdruck in einer Bremskammer derart zu reduzieren, dass das Blockieren eines oder mehrerer Räder verhindert werden kann.

Ferner ist zu beobachten, dass beispielsweise ABS-Drucksteuerventile immer strengeren Anforderungen an deren Kosteneffektivität unterliegen. Eine Verbesserung der Regelung eines ABS kann insofern die Auswirkungen derartiger Anforderungen kompensieren und/oder die Wirkung des ABS dennoch verbessern.

Der Erfindung liegt daher die Aufgabe zugrunde, den Stand der Technik zu bereichern. Eine Ausführungsform löst die Aufgabe, ein verbessertes Betreiben einer Betriebsbremse bei einer Achslastverlagerung zu erzielen, um einen zu hohen Schlupf an einem Rad des Fahrzeugs und/oder ein Aufschaukeln des Fahrzeugs möglichst zu verhindern.

Die Aufgabe wird durch ein Verfahren nach Anspruch 1 sowie den Gegenständen nach den weiteren unabhängigen Ansprüchen gelöst. Die Unteransprüche geben Weiterbildungen der Erfindung an.

Gemäß einem Aspekt der Erfindung wird ein Verfahren zum auf eine Achse eines Fahrzeugs, insbesondere Nutzfahrzeugs, bezogenes Betreiben einer Betriebsbremse zum Bremsen eines Rades der Achse bereitgestellt. Dabei weist das Verfahren auf: Erfassen einer achsfremden Eingangsgröße; Ermitteln einer Achslastverschiebung anhand der achsfremden Eingangsgröße; und Ausgeben eines Regelsignals zum Ändern einer Bremsgröße der Betriebsbremse unter Berücksichtigung der Achslastverschiebung.

Das Fahrzeug, insbesondere Nutzfahrzeug, wird im Folgenden als Fahrzeug bezeichnet. Das Verfahren ist somit ein Verfahren zum Kontrollieren beziehungsweise Steuern und/oder Regeln der Betriebsbremse, insbesondere eines Antiblockiersystems (ABS), des Fahrzeugs. Dafür wird die achsfremde Eingangsgröße erfasst. Die achsfremde Eingangsgröße kann dabei eine das Fahrzeug, aber nicht oder nicht allein die Achse mit dem zu bremsenden Rad betreffende Größe sein und/oder eine eine weitere Achse des Fahrzeugs betreffende Größe sein. Die achsfremde Eingangsgröße kann sensorisch und/oder kommunikationstechnisch, beispielsweise über einen Fahrzeugbus und/oder über eine Schnittstelle zur fahrzeugexternen Kommunikation, erfasst werden. Die Eingangsgröße kann eine Mehrzahl von verschiedenen Informationen umfassen, die das Ermitteln der Achslastverschiebung ermöglichen. Damit ist eine umfassende Charakterisierung von für das Bremsen potentiell relevanter Größen möglich.

Anhand der Eingangsgröße kann die Achslastverschiebung ermittelt werden. Die Achslastverschiebung ist dabei eine Größe, mit der, gegenüber einer Ruheposition beispielsweise bei einer Achslastverschiebung von null, eine Verlagerung des Gewichts des Fahrzeugs auf verschiedene Achsen des Fahrzeugs quantifizierbar ist. Die Achslastverschiebung kann beispielsweise aus einer Anregung einer Schwingungsmode des Fahrzeugs durch ein ABS resultieren. Dabei wurde erkannt, dass die Achslastverschiebung einen Einfluss auf die zwischen dem Rad und dem Untergrund wirkende Normalkraft hat. Verlagert sich das Gewicht des Fahrzeugs in Richtung der Achse beziehungsweise verschiebt sich die Achslast in Richtung der Achse steigt typischerweise die Normalkraft, was ein Blockieren des Rades verhindern kann. Verlagert sich das Gewicht des Fahrzeugs von der Achse weg beziehungsweise verschiebt sich die Achslast von der Achse weg sinkt typischerweise die Normalkraft, was ein Blockieren des Rades begünstigen kann. Daher wurde erkannt, dass die Achslastverschiebung eine geeignete, quantifizierbare und effektiv ermittelbare Größe ist, die einen Einfluss auf das Regeln der Betriebsbremse nehmen kann, um das Bremsen zu verbessern.

Unter Berücksichtigung der Achslastverschiebung kann das Regelsignals zum Ändern der Bremsgröße der Betriebsbremse ausgegeben werden. Durch das Regelsignal kann eine prognostizierbare Änderung der Achslastverschiebung herbeigeführt werden und/oder eine wiederholte Achslastverschiebung durch Anregung einer Schwingungsmode des Fahrzeugs vermieden werden. Dabei kann durch das gezielte Ändern der Bremsgröße ein zu hoher Schlupf des Rades vermieden werden. Ferner kann die Anregung von Schwingungsmoden und auch von einer Bewegung der Kabine unterdrückt und/oder verhindert werden. Die Bremsgröße kann dabei eine das Bremsmoment des Rades und/oder der Räder der Achse bestimmende Größe sein, mit der Betriebsbremse durch das Regelsignal beaufschlagt werden kann.

Die Erfindung stellt einen Ansatz bereit, der es ermöglicht, das Rad und/oder die Achse mit der Betriebsbremse in Abhängigkeit von Informationen, Daten beziehungsweise Größen zu kontrollieren, die als solche unabhängig oder nur mittelbar abhängig von einem Bremsen des Rads und/oder der Achse sind.

Das Verfahren kann dabei kann radindividuell, also auf nur ein Rad der Achse, angewendet werden. Alternativ oder zusätzlich kann das Verfahren auf mehrere Räder der Achse angewendet werden und/oder für mehrere Räder eines mehrere Achsen umfassenden Achspakets.

Optional erfolgt das Ermitteln der Achslastverschiebung anhand einer Änderung einer auf ein Rad einer weiteren Achse wirkenden Normalkraft. Dabei wurde erkannt, dass die auf alle Räder aller Achsen wirkende gesamte Normalkraft typischerweise wenig schwankt, wohingegen beispielsweise durch Anregung einer Schwingungsmode des Fahrzeugs die auf ein Rad einer der Achsen wirkende Normalkraft wiederholt beziehungsweise alternierend schwanken, also steigen und sinken, kann. Somit kann beispielsweise aus einem Steigen als Änderung der auf das Rad der weiteren Achse wirkenden Normalkraft auf eine Sinkende auf das Rad der Achse wirkende Kraft geschlossen werden und umgekehrt. Damit kann die auf das weitere Rad der weiteren Achse wirkende Normalkraft Aufschluss über eine mögliche Änderung der Normalkraft auf das zu bremsende Rad der Achse liefern, was somit eine Änderung der Bremsgröße implizieren kann.

Optional umfasst die achsfremde Eingangsgröße eine auf ein Rad einer weiteren Achse wirkende Normalkraft und/oder eine Achslast der weiteren Achse. Die auf das Rad der weiteren Achse wirkende Normalkraft kann mit einem Durchschnittswert verglichen und beispielsweise unter Berücksichtigung weiterer Größen, wie einer Straßenneigung, Aufschluss über die Achslastverschiebung geben. Dafür umfasst die achsfremde Eingangsgröße alternativ oder zusätzlich einen Schlupf und/oder eine Raddrehzahl des Rades der weiteren Achse. Dabei kann eine zeitliche Entwicklung der Raddrehzahl und/oder des Schlupfes erfasst und ausgewertet werden. Alternativ oder zusätzlich kann eine zeitliche Ableitung der Raddrehzahl und/oder des Schlupfes ermittelt werden. Alternativ oder zusätzlich umfasst die achsfremde Eingangsgröße eine das Fahrzeug betreffende Längsbeschleunigung. Die Längsbeschleunigung kann Aufschluss über das Verzögern des Fahrzeugs geben, woraus auf eine zu erwartende Achslastverschiebung geschlossen werden kann. Alternativ oder zusätzlich umfasst die achsfremde Eingangsgröße eine ein Bremsen des Rades der weiteren Achse betreffenden Bremsgröße. Die Bremsgröße kann beispielsweise ein Bremsdruck, eine Bremskraft und/oder ein Bremsmoment sein. Anhand der Bremsgröße kann auf eine Soll-Reaktion eines Rades, beispielsweise bei einer durchschnittlichen Achslastverteilung, geschlossen werden, die mit einer Ist-Reaktion, gegebenenfalls unter Einfluss der Achslastverschiebung, verglichen werden kann, um die Achslastverschiebung zu schätzen. Alternativ oder zusätzlich umfasst die achsfremde Eingangsgröße eine Straßenneigung, um die Straßenneigung gegebenenfalls bei der Achslastverschiebung als Offset berücksichtigen zu können.

Zum Ausgeben des Regelsignals wird eine Prognose der Achslastverschiebung ermittelt. Dabei wurde erkannt, dass durch die Trägheit des Fahrzeugs unter Einfluss des Fahrwerks die Verschiebung der Achslast einer charakteristischen Dynamik unterliegt. Die Achslastverschiebung erfolgt somit mit einer charakteristischen Zeitskala und ist demgemäß prognostizierbar. Insbesondere durch das Anregen einer Schwingungsmode des Fahrzeugs tritt eine typische Abfolge von Achslastverschiebungen auf. Durch das Prognostizieren der Achslastverschiebung kann rechtzeitig eine Änderung der Bremsgröße bewirkt werden, um die Dynamik der Betriebsbremse berücksichtigen zu können.

Optional wird das Regelsignal derart ausgegeben, dass die Bremsgröße erhöht wird, wenn ein Ansteigen einer Normalkraft zwischen dem Rad und einem Untergrund prognostiziert wird. Dabei wurde erkannt, dass eine zu erwartende erhöhte Normalkraft eine stärkere Bremsung möglich macht. Optional wird das Regelsignal derart ausgegeben, dass die Bremsgröße erniedrigt wird, wenn ein Abstürzen einer Normalkraft zwischen dem Rad und einem Untergrund prognostiziert wird, um ein Blockieren oder ein zu geringes Bremsen bei einer zu erwartenden Verringerung der Normalkraft zu vermeiden.

Optional erfolgt das Ermitteln der Achslastverschiebung anhand eines numerischen Fahrzeugmodells. Dabei wurde erkannt, dass das numerische Modell für das Bremsen relevante und das Fahrzeug betreffende Parameter definieren kann. Die Parameter können beispielsweise eine Dynamik des Fahrwerks und/oder der Betriebsbremse betreffen. Die Achslastverschiebung kann unter Berücksichtigung von Sensormesswerten als Eingabe in das numerische Fahrzeugmodell effektiv ermittelt werden.

Gemäß einem Aspekt der Erfindung wird ein Computerprogramm und/oder ein computerlesbares Medium bereitgestellt. Das Computerprogramm und/oder das computerlesbare Medium umfassen Befehle, die bei der Ausführung des Programms bzw. der Befehle durch einen Computer diesen veranlassen, das Verfahren gemäß der Erfindung und/oder Schritte davon durchzuführen. Optional umfasst das Computerprogramm und/oder das computerlesbare Medium Befehle, die bei der Ausführung des Programms bzw. der Befehle durch einen Computer diesen veranlassen, die als vorteilhaft oder optional beschriebenen Verfahrensschritte durchzuführen, um einen damit verbundenen technischen Effekt zu erzielen.

Gemäß einem Aspekt der Erfindung wird ein Steuergerät für ein Fahrzeug, insbesondere Nutzfahrzeug, bereitgestellt. Dabei ist das Steuergerät dazu eingerichtet, das oben beschriebene Verfahren durchzuführen. Optional ist das Steuergerät dazu eingerichtet, das Verfahren derart durchzuführen, dass ein oder mehrere der oben als optional beschriebenen Merkmale verwirklicht werden, um einen damit verbundenen technischen Effekt zu erzielen.

Gemäß einem Aspekt der Erfindung wird ein Fahrzeug, insbesondere Nutzfahrzeug, umfassend eine Betriebsbremse mit einem Antiblockiersystem und das oben beschriebene Steuergerät, bereitgestellt. Das Steuergerät kann dabei ein oder mehrere als optional beschriebene Merkmale aufweisen, um einen damit verbundenen technischen Effekt zu erzielen.

Weitere Vorteile und Merkmale der Erfindung sowie deren technische Effekte ergeben sich aus den Figuren und der Beschreibung der in den Figuren gezeigten bevorzugten Ausführungsformen. Dabei zeigen
- Fig. 1: eine schematische Darstellung eines Fahrzeugs, insbesondere Nutzfahrzeugs, gemäß einer Ausführungsform der Erfindung; und
- Fig. 2: eine schematische Darstellung eines Ablaufschemas eines Verfahrens gemäß einer Ausführungsform der Erfindung.

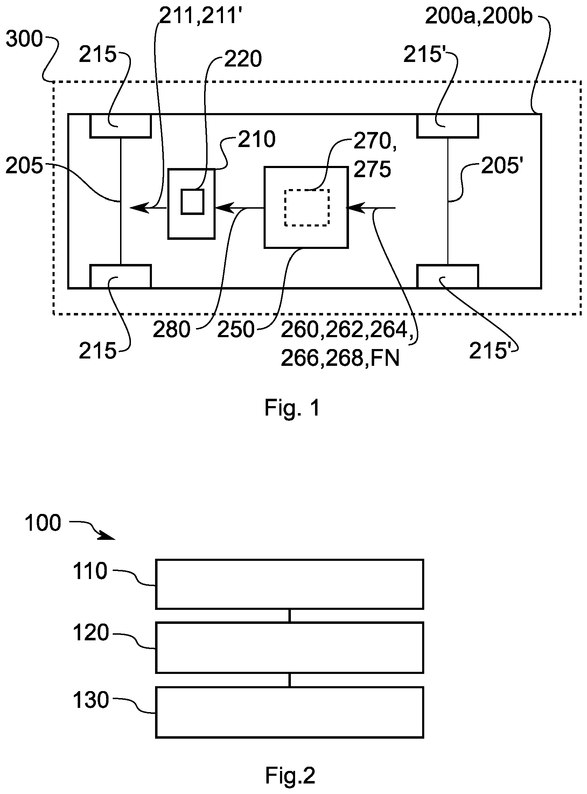

Figur 1 zeigt eine schematische Darstellung eines Fahrzeugs 200a, insbesondere Nutzfahrzeugs 200b, einer Ausführungsform der Erfindung.

Das Fahrzeug 200a, insbesondere Nutzfahrzeug 200b, wird im Folgenden als Fahrzeug 200a, 200b bezeichnet. Das Fahrzeug 200a, 200b ist ein Landfahrzeug, beispielsweise eine Zugmaschine eines mehrgliedrigen Nutzfahrzeugs.

Das Fahrzeug 200a, 200b ist in einer Umgebung auf einem Untergrund 300 angeordnet. Der Untergrund 300 ist beispielsweise eine Fahrbahn mit möglicherweise lokal unterschiedlicher Beschaffenheit. Die Beschaffenheit des Untergrunds 300 hat einen Einfluss auf einen Reibwert und somit die Fahrdynamik des Fahrzeugs 200a, 200b und insbesondere das Bremsen des Fahrzeugs 200a, 200b.

Das Fahrzeug 200a, 200b umfasst mehrere Achsen 205, 205', beispielsweise zwei Achsen 205, 205'. Das Fahrzeug 200a, 200b umfasst eine Mehrzahl von den Achsen 205, 205' zugeordneten Rädern 215, 215', beispielsweise zwei Räder 215, 215' pro Achse 205, 205'. In einer nicht gezeigten Ausführungsform weist das Fahrzeug 200a, 200b mehr als zwei Achsen 205, 205' auf und/oder das Fahrzeug 200a, 200b weist an wenigstens einer der Achsen 205, 205' mehr als zwei, beispielsweise vier, Räder 215, 215' auf.

Das Fahrzeug 200a, 200b ist mit den Rädern 215, 215' auf dem Untergrund 300 angeordnet. D.h. die Räder 215, 215' kontaktieren den Untergrund 300. Die Räder 215, 215' und der Untergrund 300 stehen an einer Kontaktfläche in Wirkverbindung miteinander. An der Kontaktfläche zwischen den Rädern 215, 215' und dem Untergrund 300 ist ein Reibwert definierbar, der den Kontakt zwischen dem jeweiligen Rad 215, 215' und dem Untergrund 300 charakterisiert. Der Reibwert kann für jedes der Räder 215, 215' verschieden sein.

Durch den Kontakt der Räder 215, 215' mit dem Untergrund 300 wirkt zwischen den Rädern 215, 215' und dem Untergrund 300 eine Normalkraft FN. Die Normalkraft FN ist dabei die senkrecht zu der Kontaktfläche zwischen dem jeweiligen Rad 215, 215' und dem Untergrund 300 wirkende Kraft. Bei einer horizontal ausgerichteten Fahrbahn als Untergrund 300 und einem ruhenden Fahrzeug 200a, 200b kann die Normalkraft FN beispielsweise in einer vertikalen Richtung wirken. Der Untergrund 300 kann eine Straßenneigung 264 aufweisen, also die Fahrbahn als Untergrund 300 kann eine Steigung und/oder ein Gefälle aufweisen. Das Fahrzeug 200a, 200b weist Kraftsensoren auf (nicht gezeigt), die die Normalkraft FN und/oder eine Differenz zwischen einer Normalkraft FN in einer Ruheposition des Fahrzeugs 200a, 200b und einer vorliegenden Normalkraft FN ermitteln. Die Kraftsensoren können beispielsweise eine zu einer Auslenkung einer Komponente eines Fahrwerks des Fahrzeugs 200a, 200b zugehörige Kraft messen.

Das Fahrzeug 200a, 200b umfasst eine Betriebsbremse 210. Die Betriebsbremse 210 ist eine pneumatische, hydraulische und/oder elektromechanische Bremse. Die Betriebsbremse 210 ist dazu eingerichtet, eine Bremswirkung zum Bremsen des Fahrzeugs 200a, 200b zu erzielen. Dafür ist die Betriebsbremse 210 dazu eingerichtet, eine Bewegung der Räder 215, 215' zu verzögern beziehungsweise ein Verzögern der Bewegung der Räder 215, 215' zu steuern und/oder zu regeln. Die Betriebsbremse 220 kann eine Bremsgröße 211,211', beispielsweise ein Bremsmoment, eine Bremskraft und/oder ein Bremsdruck, aufbringen, um das oder die Räder 215, 215' zu verzögern.

Die Betriebsbremse 210 umfasst ein Antiblockiersystem 220. Das Antiblockiersystem 220 ist dazu eingerichtet, eine Blockierneigung der Räder 215, 215' zu erkennen und ein Blockieren der Räder 215, 215' zu verhindern und/oder die Blockierneigung der Räder 215, 215' zu vermindern. Dafür ist das Antiblockiersystem 220 dazu eingerichtet, einen Eingriff in das Bremsen vorzunehmen und die Bremsgröße 211 zu vermindern, falls beispielsweise eine Blockierneigung erkannt wird, und/oder die Bremsgröße 211 zu erhöhen, falls keine Blockierneigung vorliegt.

Durch das Fahren und/oder Bremsen des Fahrzeugs 200a, 200b stellt sich eine Längsbeschleunigung 262, an den Rädern 215, 215' eine Raddrehzahl 268 und ein Schlupf 266 ein. Die Längsbeschleunigung 262 beschreibt die Bewegung des Fahrzeugs 200a, 200b in seiner Hauptfortbewegungsrichtung und ist beispielsweise mittels eines Beschleunigungssensors messbar. Die Raddrehzahl 268 eines der Räder 215, 215' ist mittels eines Raddrehzahlsensors messbar. Die Raddrehzahl 268 kann für jedes der Räder 215, 215' verschieden sein. Der Schlupf 266 ist beispielsweise anhand der Raddrehzahl 268 und einer Referenzgeschwindigkeit ermittelbar.

Durch das Bremsen des Fahrzeugs 200a, 200b kann eine Achslastverschiebung 270 erfolgen. Dabei kann sich das Fahrzeug 200a, 200b neigen. Beispielsweise neigt sich das Fahrzeug 200a, 200b beim Bremsen anfänglich nach vorne. Das Fahrwerk des Fahrzeugs 200a, 200b federt dabei vorne ein und hinten aus. Damit steigt die Normalkraft FN auf die Räder 215 der als Vorderachse ausgebildeten Achse 205 und die Normalkraft FN auf die Räder 215' der als Hinterachse ausgebildeten weiteren Achse 205' sinkt. Bei Nachlassen einer Verzögerung, beispielsweise bei einer Reduktion der Bremsgröße 211, federt das Fahrwerk des Fahrzeugs 200a, 200b hinten ein und vorne aus. Dabei sinkt die Normalkraft FN auf die Räder 215 der als Vorderachse ausgebildeten Achse 205 und die Normalkraft FN auf die Räder 215' der als Hinterachse ausgebildeten weiteren Achse 205' steigt.

Das Fahrzeug 200a, 200b umfasst ein Steuergerät 250. Das Steuergerät 250 ist dazu eingerichtet ist, das mit Bezug zu Figur 2 beschriebene Verfahren 100 durchzuführen.

Das Steuergerät 250 ist dazu eingerichtet, eine achsfremde Eingangsgröße 260 zu erfassen. Dafür ist das Steuergerät 250 zum Messen der auf das Rad 215' der weiteren Achse 205' wirkenden Normalkraft FN und/oder Achslast als Eingangsgröße 260 mit einem Kraftsensor an der Achse 205' verbunden. Zum Messen und/oder Ermitteln der Raddrehzahl 268 und/oder des Schlupfes 266 des Rades 215' der weiteren Achse 205' als Eingangsgröße 260 ist das Steuergerät 250 mit einem Raddrehzahlsensor der weiteren Achse 205' verbunden. Zum Messen der Längsbeschleunigung 262 als Eingangsgröße 260 ist das Steuergerät 250 mit einem Beschleunigungssensor verbunden. Das Steuergerät 250 ist dazu eingerichtet, die Straßenneigung 264 als topographische Karteninformation abzurufen und/oder durch eine Entfernungsmessung und eine Triangulation zu ermitteln, beispielsweise mittels LIDAR. Das Steuergerät 250 kann alternativ oder zusätzlich dazu eingerichtet sein, die zuvor genannten Eingangsgrößen 260 von einem Fahrzeugbus, beispielsweise einem CAN-Bus, abzufragen.

Das Steuergerät 250 ist dazu eingerichtet, die Achslastverschiebung 270 anhand der achsfremden Eingangsgröße 260 zu ermitteln. Dabei werden eine oder mehrere der zuvor beschriebenen Eingangsgrößen ausgewertet. Insbesondere kann dabei ein zeitlicher Verlauf der beschriebenen Eingangsgrößen 260 ausgewertet werden. Insbesondere kann eine zeitliche Ableitung der Eingangsgrößen 260 ausgewertet werden, um festzustellen, ob die jeweilige Eingangsgröße 260 steigt oder sinkt. Dabei wird die Achslastverschiebung 270 insbesondere anhand einer Änderung der auf das Rad 215'der weiteren Achse 205' wirkenden Normalkraft FN ermittelt. Die auf das Rad 215'der weiteren Achse 205' wirkende Normalkraft FN ist ein Indiz für das Ein- oder Ausfedern des Fahrzeugs 200a, 200b an der weiteren Achse 205'. Die Änderung der Normalkraft FN der weiteren Achse 205' spiegelt somit die Dynamik der Achslastverschiebung 270 wider. Das Steuergerät 250 ist dazu eingerichtet, ein numerischen Fahrzeugmodells 275 auszuwerten. Dabei kann das Steuergerät 250 die Eingangsgröße 260 als Eingabe nutzen und die Achslastverschiebung 270 dynamisch berechnen.

Das Steuergerät 250 ist dazu eingerichtet, ein Regelsignal 280 zum Ändern der Bremsgröße 211 der Betriebsbremse 210 und der Achslastverschiebung 270 an die Betriebsbremse 210 auszugeben. Dabei wird zur Ausgabe des Regelsignals 280 eine Prognose der Achslastverschiebung 270 ermittelt. Das Regelsignal 280 wird derart ausgegeben, dass die Bremsgröße 211 erhöht wird, wenn ein Ansteigen einer Normalkraft FN zwischen dem Rad 215 und einem Untergrund 300 prognostiziert wird. Das Regelsignal 280 wird derart ausgegeben, dass die Bremsgröße 211 erniedrigt wird, wenn ein Abstürzen einer Normalkraft FN zwischen dem Rad 215 und einem Untergrund 300 prognostiziert wird. Das Regelsignal 280 wird derart ausgegeben, dass das Ändern der Bremsgröße 211 alternativ, zusätzlich und/oder alternierend zu einer ABS-Regelung durch das Antiblockiersystem 220 erfolgt.

Das Fahrzeug 200a, 200b ist somit dazu eingerichtet, mögliche negative Auswirkungen einer Achslastverschiebung 270 zu verringern und/oder zu vermeiden. Eine starke Achslastverschiebung 270 kann ein abruptes Abfallen eines Rades 215, 215' bedingen, also eine zu starke und unerwünschte Erhöhung des Schlupfes 266 beispielsweise wegen einer sinkenden auf das Rad 215 wirkenden Normalkraft FN. Wenn die Achslastverschiebung 270 zu stark ist, kann ein Bremssystem gemäß dem Stand der Technik möglicherweise einen erforderlichen Druckabbau nicht schnell genug bereitstellen und so die Achslastverschiebung 270 weiter verstärken. Das Fahrzeug 200a, 200b gemäß Figur 1 ist dazu eingerichtet, die Bremsgröße 211 für die Frontachse 205 konstant zu halten oder zu reduzieren, wenn das weitere Rad 215' der weiteren Achse 205', also der Hinterachse, abfällt. Damit kann bei einer folgenden Achslastverschiebung 270 nach hinten, einem Abfallen des Rads 215 der Vorderachse 205 entgegengewirkt werden. Alternativ oder zusätzlich ist das Steuergerät 250 dazu eingerichtet, ein Modell für die Achslastverschiebung 270 zu berechnen, die Achslastverschiebung 270 zu prognostizieren und die Bremsgröße 211 gemäß einer Prognose der Achslastverschiebung 270 zu ändern.

Figur 2 zeigt eine schematische Darstellung eines Ablaufschemas eines Verfahrens 100 gemäß einer Ausführungsform der Erfindung. Das Verfahren 100 ist ein Verfahren 100 zum auf eine Achse 205 eines Fahrzeugs 200a, insbesondere Nutzfahrzeugs 200b, bezogenes Betreiben einer Betriebsbremse 210 zum Bremsen eines Rades 215 der Achse 205. Ein derartiges Fahrzeug 200a, 200b ist mit Bezug zu Figur 1 beschrieben. Figur 2 wird unter Bezugnahme auf Figur 1 beschrieben.

Gemäß Figur 2 weist das Verfahren 100 auf: Erfassen 110 einer achsfremden Eingangsgröße 260. Die achsfremde Eingangsgröße 260 umfasst eine auf ein Rad 215' einer weiteren Achse 205' wirkende Normalkraft FN, eine Achslast der weiteren Achse 205', einen Schlupf 266 des Rades 215' der weiteren Achse 205', eine Raddrehzahl 268 des Rades 215' der weiteren Achse 205', eine das Fahrzeug 200a, 200b betreffende Längsbeschleunigung 262, eine ein Bremsen des Rades 215' der weiteren Achse 205' betreffenden Bremsgröße 211' und/oder eine Straßenneigung 264.

Das Verfahren 100 weist auf: Ermitteln 120 einer Achslastverschiebung 270 anhand der achsfremden Eingangsgröße 260. Das Ermitteln 120 der Achslastverschiebung 270 erfolgt anhand einer Änderung einer auf ein Rad 215' einer weiteren Achse 205' wirkenden Normalkraft FN. Das Ermitteln 120 der Achslastverschiebung 270 erfolgt anhand eines numerischen Fahrzeugmodells 275.

Das Verfahren 100 weist auf: Ausgeben 130 eines Regelsignals 280 zum Ändern einer Bremsgröße 211 der Betriebsbremse 211 unter Berücksichtigung der Achslastverschiebung 270. Zum Ausgeben 130 des Regelsignals 280 wird eine Prognose der Achslastverschiebung 270 ermittelt. Das Regelsignal 280 wird derart ausgegeben, dass die Bremsgröße 211 erhöht wird, wenn ein Ansteigen einer Normalkraft FN zwischen dem Rad 215 und einem Untergrund 300 prognostiziert wird. Das Regelsignal 280 wird derart ausgegeben, dass die Bremsgröße 211 erniedrigt wird, wenn ein Abstürzen einer Normalkraft FN zwischen dem Rad 215 und einem Untergrund 300 prognostiziert wird.

### Bezugszeichen (Teil der Beschreibung)

- 100: Verfahren
- 110: Erfassen
- 120: Ermitteln
- 130: Ausgeben

- 200a: Fahrzeug
- 200b: Nutzfahrzeug
- 201: Massenschwerpunkt
- 205, 205': Achse
- 210: Betriebsbremse
- 211, 211': Bremsgröße
- 215, 215': Rad
- 220: Antiblockiersystem
- 250: Steuergerät

- 260: achsfremde Eingangsgröße
- 262: Längsbeschleunigung
- 264: Straßenneigung
- 266: Schlupf
- 268: Raddrehzahl
- 270: Achslastverschiebung
- 275: Fahrzeugmodell
- 280: Regelsignal

- 300: Untergrund

- FN: Normalkraft

## Patentansprüche

1. Verfahren (100) zum auf eine Achse (205) eines Fahrzeugs (200a), insbesondere Nutzfahrzeugs (200b), bezogenes Betreiben einer Betriebsbremse (210) zum Bremsen eines Rades (215) der Achse (205), wobei das Verfahren (100) aufweist:
- Erfassen (110) einer achsfremden Eingangsgröße (260);
- Ermitteln (120) einer Achslastverschiebung (270) anhand der achsfremden Eingangsgröße (260); und
- Ausgeben (130) eines Regelsignals (280) zum Ändern einer Bremsgröße (211) der Betriebsbremse (210) unter Berücksichtigung der Achslastverschiebung (270), **dadurch gekennzeichnet, dass** zum Ausgeben (130) des Regelsignals (280) eine Prognose der Achslastverschiebung (270) ermittelt wird.

2. Verfahren (100) nach Anspruch 1, wobei das Ermitteln (120) der Achslastverschiebung (270) anhand einer Änderung einer auf ein Rad (215') einer weiteren Achse (205') wirkenden Normalkraft (FN) erfolgt.

3. Verfahren (100) nach Anspruch 1 oder 2, wobei die achsfremde Eingangsgröße (260) eine auf ein Rad (215') einer weiteren Achse (205') wirkende Normalkraft (FN), eine Achslast der weiteren Achse (205'), einen Schlupf (266) des Rades (215') der weiteren Achse (205'), eine Raddrehzahl (268) des Rades (215') der weiteren Achse (205'), eine das Fahrzeug (200a), insbesondere Nutzfahrzeug (200b), betreffende Längsbeschleunigung (262), eine ein Bremsen des Rades (215') der weiteren Achse (205') betreffenden Bremsgröße (211') und/oder eine Straßenneigung (264) umfasst.

4. Verfahren (100) nach einem der vorherigen Ansprüche, wobei das Regelsignal (280) derart ausgegeben wird, dass die Bremsgröße (211) erhöht wird, wenn ein Ansteigen einer Normalkraft (FN) zwischen dem Rad (215) und einem Untergrund (300) prognostiziert wird.

5. Verfahren (100) nach einem der vorherigen Ansprüche, wobei das Regelsignal (280) derart ausgegeben wird, dass die Bremsgröße (211) erniedrigt wird, wenn ein Abstürzen einer Normalkraft (FN) zwischen dem Rad (215) und einem Untergrund (300) prognostiziert wird.

6. Verfahren (100) nach einem der vorherigen Ansprüche, wobei das Ermitteln (120) der Achslastverschiebung (270) anhand eines numerischen Fahrzeugmodells (275) erfolgt.

7. Computerprogramm und/oder computerlesbares Medium, umfassend Befehle, die bei der Ausführung des Programms bzw. der Befehle durch einen Computer diesen veranlassen, das Verfahren (100) und/oder die Schritte des Verfahrens (100) nach einem der vorherigen Ansprüche durchzuführen.

8. Steuergerät (250) für ein Fahrzeug (200a), insbesondere Nutzfahrzeug (200b), wobei das Steuergerät (250) dazu eingerichtet ist, das Verfahren (100) nach einem der Ansprüche 1 bis 6 durchzuführen.

9. Fahrzeug (200a), insbesondere Nutzfahrzeug (200b), umfassend eine Betriebsbremse (210) mit einem Antiblockiersystem (220) und das Steuergerät (250) nach Anspruch 8.

## Claims

1. Method (100) for operating, in relation to an axle (205) of a vehicle (200a), in particular a commercial vehicle (200b), a service brake (210) for braking a wheel (215) of the axle (205), wherein the method (100) comprises:
- detecting (110) a non-axle input variable (260);
- ascertaining (120) an axle load shift (270) using the non-axle input variable (260); and
- outputting (130) a control signal (280) to change a braking variable (211) of the service brake (210) while taking into account the axle load shift (270),
**characterized in that**
in order to output (130) the control signal (280), a forecast of the axle load shift (270) is ascertained.

2. Method (100) according to claim 1, wherein the axle load shift (270) is ascertained (120) using a change in a normal force (FN) acting on a wheel (215') of a further axle (205').

3. Method (100) according to claim 1 or 2, wherein the non-axle input variable (260) comprises a normal force (FN) acting on a wheel (215') of a further axle (205'), an axle load of the further axle (205'), a slip (266) of the wheel (215') of the further axle (205'), a wheel speed (268) of the wheel (215') of the further axle (205'), a longitudinal acceleration (262) relating to the vehicle (200a), in particular the commercial vehicle (200b), a braking variable (211') relating to a braking process of the wheel (215') of the further axle (205'), and/or a road inclination (264).

4. Method (100) according to any of the preceding claims, wherein the control signal (280) is output such that the braking variable (211) is increased if a normal force (FN) between the wheel (215) and a surface (300) is forecast to increase.

5. Method (100) according to any of the preceding claims, wherein the control signal (280) is output such that the braking variable (211) is decreased if a normal force (FN) between the wheel (215) and a surface (300) is forecast to decrease.

6. Method (100) according to any of the preceding claims, wherein the axle load shift (270) is ascertained (120) using a numerical vehicle model (275).

7. Computer program and/or computer-readable medium comprising instructions which, when the program or instructions are executed by a computer, cause the computer to perform the method (100) and/or the steps of the method (100) according to any of the preceding claims.

8. Control unit (250) for a vehicle (200a), in particular a commercial vehicle (200b), wherein the control unit (250) is configured to perform the method (100) according to any of claims 1 to 6.

9. Vehicle (200a), in particular a commercial vehicle (200b), comprising a service brake (210) with an anti-lock braking system (220), and comprising the control unit (250) according to claim 8.

## Revendications

1. Procédé (100) pour l'actionnement d'un frein de service (210) sur un essieu (205) d'un véhicule (200a), en particulier d'un véhicule utilitaire (200b), permettant de freiner une roue (215) de l'essieu (205), dans lequel le procédé (100) présente :
- la détection (110) d'une grandeur d'entrée (260) non liée à l'essieu ;
- la détermination (120) d'un décalage de charge par essieu (270) à l'aide de la grandeur d'entrée (260) non liée à l'essieu ; et
- l'émission (130) d'un signal de régulation (280) permettant de modifier une grandeur de freinage (211) du frein de service (210) en prenant en compte le décalage de charge par essieu (270), **caractérisé en ce que**
une prévision du décalage de charge par essieu (270) est déterminée pour l'émission (130) du signal de régulation (280).

2. Procédé (100) selon la revendication 1, dans lequel la détermination (120) du décalage de charge par essieu (270) est effectuée à l'aide d'une modification d'une force normale (FN) agissant sur une roue (215') d'un autre essieu (205').

3. Procédé (100) selon la revendication 1 ou 2, dans lequel la grandeur d'entrée (260) non liée à l'essieu comprend une force normale (FN) agissant sur une roue (215') d'un autre essieu (205'), une charge par essieu de l'autre essieu (205'), un patinage (266) de la roue (215') de l'autre essieu (205'), une vitesse de rotation (268) de la roue (215') de l'autre essieu (205'), une accélération longitudinale (262) concernant le véhicule (200a), en particulier le véhicule utilitaire (200b), une grandeur de freinage (211') concernant un freinage de la roue (215') de l'autre essieu (205') et/ou une inclinaison de la route (264).

4. Procédé (100) selon l'une des revendications précédentes, dans lequel le signal de régulation (280) est émis de telle sorte que la grandeur de freinage (211) est augmentée lorsqu'une augmentation d'une force normale (FN) entre la roue (215) et un sol (300) est prévue.

5. Procédé (100) selon l'une des revendications précédentes, dans lequel le signal de régulation (280) est émis de telle sorte que la grandeur de freinage (211) est réduite lorsqu'une chute d'une force normale (FN) entre la roue (215) et un sol (300) est prévue.

6. Procédé (100) selon l'une des revendications précédentes, dans lequel la détermination (120) du décalage de charge par essieu (270) est effectuée à l'aide d'un modèle numérique de véhicule (275).

7. Programme informatique et/ou support lisible par ordinateur, comprenant des instructions qui, lors de l'exécution du programme ou des instructions par un ordinateur, amènent ce dernier à mettre en œuvre le procédé (100) et/ou les étapes du procédé (100) selon l'une des revendications précédentes.

8. Appareil de commande (250) pour un véhicule (200a), en particulier un véhicule utilitaire (200b), dans lequel l'appareil de commande (250) est configuré pour mettre en œuvre le procédé (100) selon l'une des revendications 1 à 6.

9. Véhicule (200a), en particulier véhicule utilitaire (200b), comprenant un frein de service (210) comportant un antiblocage de sécurité (220) et l'appareil de commande (250) selon la revendication 8.
